# EUROPEAN PATENT APPLICATION

(11) **EP 2 456 209 A1**
(43) Date of publication of application: **23.05.2012**
(21) Application number: 10851247.6
(22) Date of filing: 29.07.2010
(51) Int. Cl.: H04N 9/69, G09G 3/36

(54) **METHOD AND APPARATUS FOR CORRECTING GAMMA VALUE OF LCD SCREEN**

(30) Priority: 14.05.2010 CN 201010179880
(71) Applicant: ZTE Corporation, Shenzhen, Guangdong 518057 (CN)
(72) Inventor: WANG, Ligang, Shenzhen Guangdong 518057 (CN)
(74) Representative: Gervasi, Gemma
(86) International application number: PCT/CN2010/075558
(87) International publication number: WO 2011/140742

(57) **Abstract**

A method and an apparatus for correcting gamma values of LCD screen are provided in the present invention to solve the problem of color cast and color difference due to that the existing LCD screen can only control the gamma values of the LCD screen to balance brightness, color and contrast of the LCD screen by adjusting the brightness of white backlight and it cannot respectively control the gamma values of the RGB three colors of the LCD screen. The present invention uses a method for separately adjusting the gamma values of the RGB three colors of the LCD screen, that is, separately adjusting the red, green and blue three color lights, to improve the display effect of the LCD screen, moreover, the display effect is optimized by readjusting the current working state value of the LCD screen.

## Description

### Technical Field

The present invention relates to the field of LCD screen display, and more particularly, to a method and an apparatus for correcting gamma values of the LCD screen.

### Background of the Related Art

LCD (Liquid Crystal Display) screen is widely used in many fields such as mobile phones, computers, TVs and cameras that need to display. Usually the purpose of adjusting the display effect of the LCD screen can be achieved by adjusting the gamma values (grayscale coefficient) of the LCD screen.

Currently, the main defects of the LCD screen commonly used in the mobile communication terminal products are: poor display effect, mainly embodied in the problem that the screen has color cast or color difference such as redder than normal or bluer than normal, and so on; and poor color contrast. The main reason leading to the aforementioned defects is that: the currently used LCD screen can only control the gamma values of the LCD screen by adjusting the brightness of the white backlight, so as to balance the brightness, chroma and contrast of the LCD screen, however, the method cannot separately control the gamma values of the RGB (red, green and blue) three colors of the LCD screen, resulting in the problem of color cast and color difference. Meanwhile, adjusting the brightness of the white backlight to control the gamma values of the LCD screen is only one-time for all factory adjustment, it cannot cope with the problem of color cast and color difference due to the performance degradation caused by the apparatus aging in future.

### Summary of the Invention

The main purpose of the present invention is to provide a method and an apparatus for correcting gamma values of a LCD screen to improve the display effect of the LCD screen.

The present invention provides a method for correcting gamma values of a LCD screen, and the method comprises the following steps:
setting different working state values of the LCD screen;
sampling the gamma values embodying the display effect of the LCD screen and corresponding to the different working state values of the LCD screen to acquire the sampled gamma values;
fitting the sampled gamma values to the standard gamma curve to acquire the fitted gamma values that most conform to the standard gamma curve;
storing the corresponding working state values of the LCD screen corresponding to the fitted gamma values;
according to the corresponding relationship between the preset fitted gamma values and the working state values of the LCD screen, reading the corresponding working state values of the LCD screen corresponding to the fitted gamma values, and adjusting the current working state value of the LCD screen.

Preferably, the step of setting different working state values of the LCD screen specifically comprises:
setting the working state values of the LCD screen display module under different display effects, wherein:
the working state values of the LCD screen display module are combinations of different working state values of the red backlight module, the green backlight module and the blue backlight module in the LCD screen display module;
the different working state values of the red backlight module, the green backlight module and the blue backlight module are discrete current values gradually increasing from zero by taking one-tenth of the maximum value of the backlight current source as the increment step.

Preferably, after the step of sampling the gamma values embodying the display effects of the LCD screen and corresponding to different working state values of the LCD screen to acquire the sampled gamma values, the method also comprises:
in accordance with the working state order of the red backlight module, the green backlight module and the blue backlight module in the LCD screen display module, correspondingly store the sampled gamma values.

Preferably, the step of fitting the sampled gamma values to the standard gamma curve to acquire the fitted gamma values that most conform to the standard gamma curve specifically comprises:
comparing the stored sampled gamma values with the standard gamma values in the standard gamma curve to acquire the fitted gamma values which are closest to the standard gamma values, and forming the fitted gamma value parameter table.

Preferably, the working states of the LCD screen comprise: brightness, contrast, saturation and/or grayscale of the LCD screen.

The present invention provides an apparatus for correcting gamma values of a LCD screen, comprising:
a setting module, used to set different working state values of the LCD screen;
a measurement module, used to sample the gamma values embodying the display effects of the LCD screen according to different working state values of the LCD screen to acquire the sampled gamma values;
a fitting module, used to fit the sampled gamma values to the standard gamma curve to acquire the fitted gamma values that most conform to the standard gamma curve;
a parameter application adjustment module, used to store the corresponding working state values of the LCD screen corresponding to the fitted gamma values; and also used to read the corresponding working state values of the LCD screen corresponding to the fitted gamma values according to the corresponding relationship between the preset fitted gamma values and the working state values of the LCD screen, and adjust the current working state value of the LCD screen.

Preferably, the setting module is also used to set the working state values of the LCD screen display module under different display effects, wherein:
the working state values of the LCD screen display module are combinations of different working state values of the red module backlight module, the green backlight module and the blue backlight module in the LCD display module;
different working state values of the red backlight module, the green backlight module and the blue backlight module are discrete current values gradually increasing from zero by taking one-tenth of the maximum value of the backlight current source as the increment step.

Preferably, the apparatus also comprises:
a data storage module, used to correspondingly store the sampled gamma values according to the working state order of the red backlight module, the green backlight module and the blue backlight module in the LCD screen display module.

Preferably, the fitting module is also used to compare the stored sampled gamma values with the standard gamma values in the standard gamma curve to obtain the fitted gamma values which are closest to the standard gamma values and to form the fitted gamma value parameter table.

Preferably, the working states of the LCD screen comprise: brightness, contrast, saturation and/or grayscale of the LCD screen.

The present invention uses the method for separately adjusting the gamma values of the RGB three colors of the LCD screen, that is, separately adjusting the red, green and blue three color lights to improve the display effect of the LCD screen, and optimizes the display effect by readjusting the current working state value of the LCD screen, thus to solve the problem of color cast and color different due to the performance degradation and the apparatus aging of the existing LCD screen products, so as to reduce the maintenance costs due to the customer return or maintenance resulting from the poor display effect of the LCD screen.

### Brief Description of Drawings

FIG. 1 is a flow chart of an embodiment of the method for correcting the gamma values of the LCD screen in accordance with the present invention;
FIG. 2 is a flow chart of setting different working state values of the red backlight module in the aforementioned embodiment;
FIG. 3 is a flow chart of setting different working state values of the green backlight module in the aforementioned embodiment;
FIG. 4 is a flow chart of setting different working state values of the blue backlight module in the aforementioned embodiment;
FIG. 5 is a structural diagram of an embodiment of the apparatus for correcting the gamma values of the LCD screen in accordance with the present invention.

### Preferred Embodiments of the Present Invention

To make the technical solution of the present invention more clear, the present invention will be described in further detail with combination of the accompanying figures:

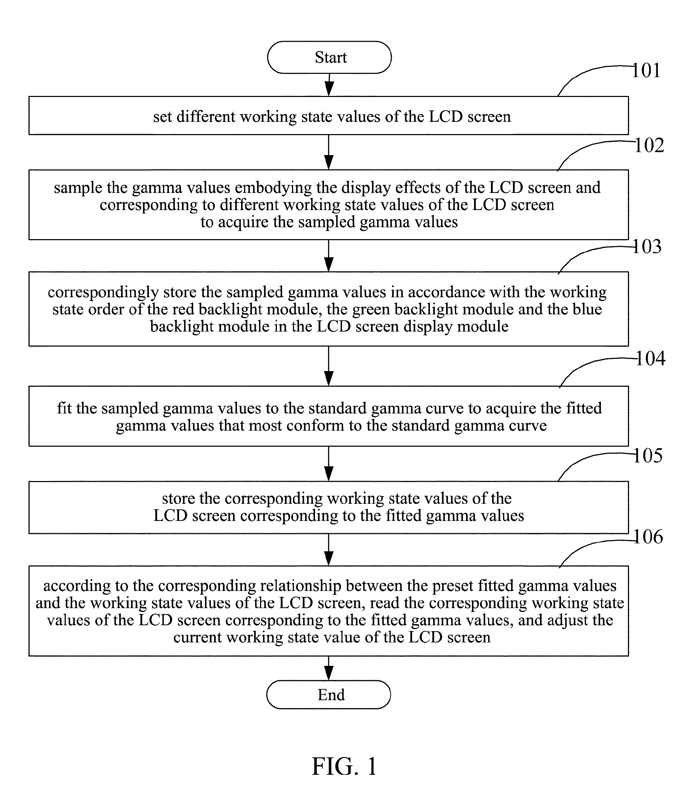

FIG. 1 is a flow chart of an embodiment of the method for correcting the gamma values of the LCD screen in accordance with the present invention.

As shown in FIG. 1, a method for correcting the gamma values of the LCD screen provided in an embodiment of the present invention comprises the following steps:
step 101, set different working state values of the LCD screen;
step 102, sample the gamma values embodying the display effects of the LCD screen and corresponding to different working state values of the LCD screen to acquire the sampled gamma values;
step 103, correspondingly store the sampled gamma values in accordance with the working state order of the red backlight module, the green backlight module and the blue backlight module in the LCD screen display module.

The application environment of this embodiment at least comprises: the LCD screen display module, the red backlight module, the green backlight module and the blue backlight module in the LCD screen and so on.

In the aforementioned step 101, setting different working state values of the LCD screen specifically comprises: setting the working state values of the LCD screen display module under different display effects, wherein, the working state values of the LCD screen display module are combinations of different working state values of the red backlight module, the green backlight module and the blue backlight module in the LCD display module.

The current values IO_001, IO_002 and IO_003 of the backlight current source are taken to respectively indicate the working state values of the red backlight module, the green backlight module and the blue backlight module, and the different working state values of the red backlight module, the green backlight module and the blue backlight module are discrete current values increasing gradually from zero with one-tenth of the maximum value of the backlight current source value as the increment step.

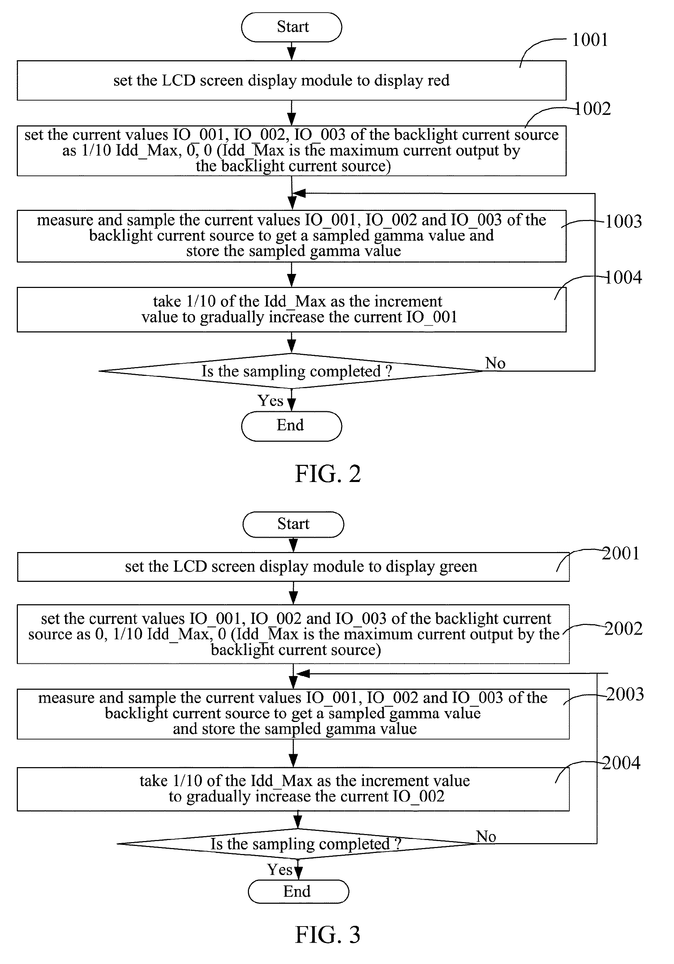

As shown in FIG. 2, the specific process of setting different working state values of the red backlight module is:
step 1001, set the LCD screen display module to display red;
step 1002, set the current values IO_001, IO_002, IO_003 of the backlight current source as 1/10 Idd_Max, 0,0 (Idd_Max is the maximum current output by the backlight current source);
in the setting process, by only changing the current value of the red backlight current source, the current values of the other two color (blue and green) backlight current sources are zero and remain unchanged. In the following, the processes of setting different working state values of the blue and green backlights are similar.
Step 1003, measure and sample the current values IO_001, IO_002 and IO_003 of the backlight current source to get a sampled gamma value and store the sampled gamma value;
step 1004, take 1/10 of the Idd_Max as the increment value to gradually increase the current IO_001, then repeat step 1003, sequentially record a plurality of measured and sampled gamma values, store the sampled gamma values, and wherein the plurality of sampled gamma values are stored continuously and orderly.

As shown in FIG. 3, the specific process of setting different working state values of the green backlight module is:
step 2001, set the LCD screen display module to display green;
step 2002, set the current values IO_001, IO_002 and IO_003 of the backlight current source as 0, 1/10 Idd_Max, 0 (Idd_Max is the maximum current output by the backlight current source);
step 2003, measure and sample the current values IO_001, IO_002 and IO_003 of the backlight current source to get a sampled gamma value and store the sampled gamma value;
step 2004, take 1/10 of the Idd_Max as the increment value to gradually increase the current IO_002, then repeat step 2003, sequentially record a plurality of measured sampled gamma values, store the sampled gamma values, and wherein the plurality of sampled gamma values are stored continuously and orderly.

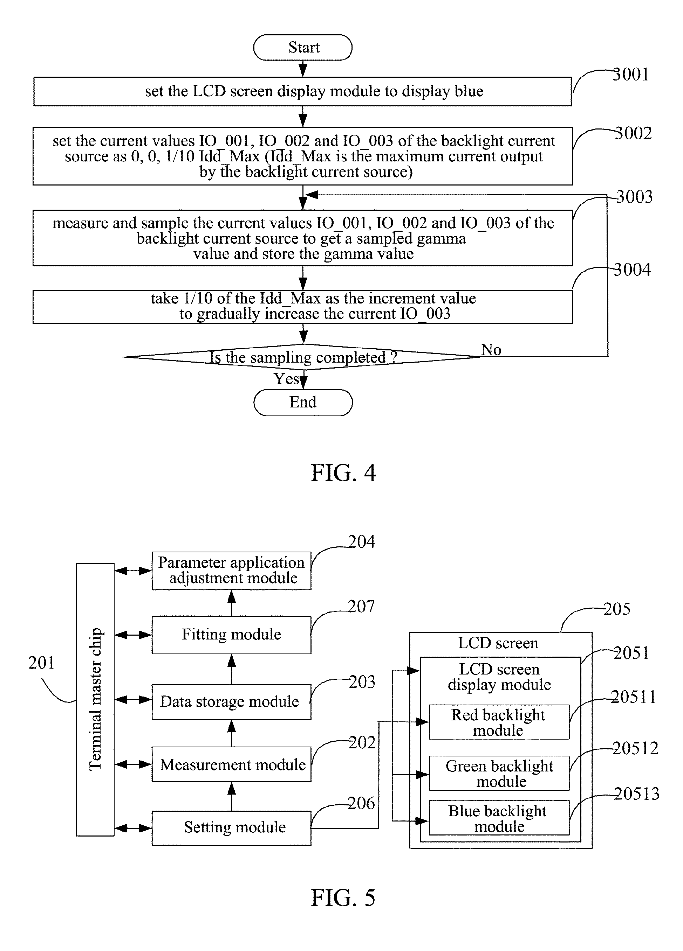

As shown in FIG. 4, the specific process of setting different working state values of the blue backlight module is:
step 3001, set the LCD screen display module to display blue;
step 3002, set the current values IO_001, IO_002 and IO_003 of the backlight current source as 0, 0, 1/10 Idd_Max (Idd_Max is the maximum current output by the backlight current source);
step 3003, measure and sample the current values IO_001, IO_002 and IO_003 of the backlight current source to get a sampled gamma value and store the sampled gamma value;
step 3004, take 1/10 of the Idd_Max as the increment value to gradually increase the current IO_003, then repeat step 3003, sequentially record a plurality of measured sampled gamma values, store the sampled gamma values, and wherein the plurality of sampled gamma values are stored continuously and orderly.

In accordance with the aforementioned method, it is to sequentially sample different working state values of the LCD screen to acquire the sampled gamma values corresponding to different display effects of the LCD screen, and to form the sampled gamma value parameter table; in accordance with the working state order of the red backlight module, the green backlight module, and the blue backlight module in the LCD screen display module, it is to correspondingly store the sampled gamma values in the sampled gamma value parameter table, and the storage is intended to facilitate the corresponding comparison between the sampled gamma values and the corresponding standard gamma values in the standard gamma curve in the follow-up step of fitting the sampled gamma values to the standard gamma curve.

Step 104, fit the sampled gamma values to the standard gamma curve to acquire the fitted gamma values that most conform to the standard gamma curve;

compare the stored sampled gamma values with the standard gamma values in the standard gamma curve to get the fitted gamma values that most conform to the standard gamma values and to form the fitted gamma value parameter table.

The gamma curve is a special tone curve, when the gamma value equals to 1, the curve is a straight line angled with the axis by 45°, indicating that the input and output densities are the same; the gamma values greater than 1 will cause the output brightening, while the gamma values less than 1 will cause the output darkening. The standard requirement is to make the ration of input to output close to 1 as much as possible.

Step 105, store the corresponding working state values of the LCD screen corresponding to the fitted gamma values.

When comparing the stored sampled gamma values with the standard gamma values in the standard gamma curve to acquire the fitted gamma values that most conform to the standard gamma values, the current source setting values IO_001, IO_002 and IO_003 corresponding to the most fitted gamma values are stored.

Step 106, according to the corresponding relationship between the preset fitted gamma values and the working state values of the LCD screen, read the corresponding working state values of the LCD screen corresponding to the fitted gamma values, and adjust the current working state value of the LCD screen.

In this embodiment, the working states of the LCD screen comprise: brightness, contrast, grayscale and/or saturation of the LCD screen.

When a user needs to change the working state of the LCD screen, that is to reset the working state of the LCD screen, for example, the user sets the current LCD screen brightness as level 5, the terminal reads the corresponding working state value of the LCD screen corresponding to the fitted gamma values according to the corresponding relationship between the preset fitted gamma values and the working state values of the LCD screen, that is, reads the working state values of the red backlight module (LED_R module), the green backlight module (LED_G module), and the blue color backlight module (LED_B module) in the LCD screen display module, so as to adjust the current working state value of the LCD screen, that is, adjust the working state values of the red backlight module, the green backlight module, and the blue backlight module in the current LCD screen display module, so as to improve the display effect of the LCD screen.

The present invention uses the method for separately adjusting the gamma values of the RGB three colors of the LCD screen, that is, separately adjusting the red, green and blue three color lights to improve the display effect of the LCD screen, and optimize the display effect by readjusting the current working state value of the LCD screen, thus to solve the problem of color cast and color different due to the performance degradation and apparatus aging of the existing LCD screen products, and to reduce the maintenance costs resulting from the customer return or maintenance due to the poor display effect of the LCD screen.

FIG. 5 shows a structural diagram of an embodiment of the apparatus for correcting gamma values of a LCD screen in accordance with the present invention.

As shown in FIG. 5, the apparatus for correcting gamma values of a LCD screen provided in the present invention comprises:
the setting module 206, used to set different working state values of the LCD screen;
the measurement module 202, used to sample the gamma values embodying the display effects of the LCD screen 205 according to different working state values of the LCD screen to acquire the sampled gamma values;
the data storage module 203, used to correspondingly store the sampled gamma values according to the working state order of the red backlight module 20511, the green backlight module 20512 and the blue backlight module 20513 in the LCD screen display module 2051;
the fitting module 207, used to fit the sampled gamma values to the standard gamma curve to acquire the fitted gamma values that most conform to the standard gamma curve;
the parameter application adjustment module 204, used to store the corresponding working state values of the LCD screen 205 corresponding to the fitted gamma values; and also used to read the corresponding working state values of the LCD screen corresponding to the fitted gamma values according to the corresponding relationship between the pre-fitted gamma values and the working state values of the LCD screen, and adjust the current working state value of the LCD screen.

All these modules are set in the terminal, and are connected with the terminal master chip 201 with the data line, and the terminal master chip 201 controls the work of the modules.

The LCD screen 205 in this embodiment connects with the terminal master chip 201 through the setting module 206, and is used to output the display effect; the LCD screen 205 comprises:
the LCD screen display module 2051, used to display different colors and to acquire the working state values of the LCD screen display module 2051; wherein, the LCD screen display module 2051 specifically comprises:
the red backlight module 20511, used to provide red backlight resource for the LCD screen display module 2051;
the green backlight module 20512, used to provide green backlight resource for the LCD screen display module 2051;
the blue backlight module 20513, used to provide blue backlight resource for the LCD screen display module 2051.

The terminal master chip 201 connects with each functional module with the data line, and the internal circuit connection is in particular:
the current output ends of the current values (IO_001, IO_002, IO_003) of the backlight current source in the terminal master chip 201 respectively connect with the red backlight module (LED_R) 20511, the green backlight module (LED_G) 20512 and the blue backlight module (LED_B) 20513 with the data line through the setting module 206;
the terminal master chip 201 connects with the LCD display module 2051 with the lcd bus (lcd_bus) through the setting module 206 to control the LCD display module (LCD) 2051;
the terminal master chip 201 connects with the measurement module 202 with the usb bus (usb_bus) to control the measurement module (GAMMA_sensor) 202;
the terminal master chip 201 connects with the data storage module 203 via the ram bus (ram_bus) to control the data storage module 203 to access to the sampled gamma values;
the terminal master chip 201 connects to the fitting module 207 with the data line to control the fitting module 207 to fit the sampled gamma values to the standard gamma curve;
the terminal master chip 201 connects to the parameter application adjustment module 204 with the flash bus (flash_bus) to control the parameter application adjustment module 204 to access and adjust the fitted gamma values.

When a user uses said apparatus to adjust the LCD screen 205 which has color cast or color difference, he/she can control the terminal master chip 201 with the keyboard, first, the usb bus is used to connect the measurement module (GAMMA_sensor) 202 to the terminal master chip 201 to make the measurement module 202 exactly direct to the LCD screen 205. Then the keyboard input is used to control the terminal master chip 201 to enter the gamma data sampling mode, according to the steps of the method for correcting the gamma values of the LCD screen 205 provided in the embodiment shown in FIG. 2, the terminal master chip 201 respectively sets the different working state values of the red backlight module 20511, the green backlight module 20512 and the blue backlight module 20513 in the LCD screen display module 2051 via the setting module 206, and samples the gamma values corresponding to the working state values of the LCD screen with the measurement module 202 to acquire the sampled gamma values so as to form the sampled gamma value parameter table, and stores the gamma values in the gamma value parameter table into the data storage module 203, and then with the fitting module 207, fits the sampled gamma values in the sampled gamma value parameter table to the standard gamma curve to acquire the fitted gamma values that most conform to the standard gamma curve and acquire the fitted gamma value parameter table. The terminal master chip 201 controls to store the working state values of the LCD screen 205 corresponding to the most fitted gamma values, that is, the current values IO_001, IO_002 and IO_003 of the backlight current source, into the parameter application adjustment module 204.

At this time, the terminal master chip 201 starts the parameter application adjustment function to improve the display effect according to the current working state that is already set for the LCD screen 205, for example, the current brightness of the LCD screen 205 is set as level 5, the terminal master chip 201 reads and saves the current values IO_001, IO_002 and IO_003 of the corresponding backlight current source stored in the parameter application adjustment module 204, and adjusts (resets) the current working state value of the LCD screen 205 to achieve the purpose of adjusting the current brightness.

The user can also change the current setting of the LCD screen 205, for example, set the brightness of the LCD screen 205 as level three or saturation, grayscale and so on, so as to adjust the display effect of the LCD screen 205.

The method for respectively adjusting the gamma values of the RGB three colors of the LCD screen 205, that is, respectively adjusting the red, green and blue three color lights according to different working states of the LCD screen 205 in accordance with this embodiment can improve the display effect of the LCD screen 205, if the original LCD screen 205 is redder than normal by 5% , with the method for separately adjusting the three colors, the driven current value of the red backlight module 20511 is reduced by 5%, thus to solve the problem of display of redder than normal and to improve the display effect. Therefore, the display effect is optimized by readjusting the current working state value of the LCD screen 205, making up for the problem that the existing technology cannot adjust the color cast and solving the problem of color cast or color difference due to the poor performance or apparatus aging of the existing products of the LCD screen 205, thus to reduce the maintenance costs caused by hardware replacement, customer return or maintenance resulting from the poor display effect of the LCD screen 205, and the users can easily and conveniently operate the apparatus provided in the present invention.

The above description is the preferred embodiments of the present invention, and it is not intended to limit the scope of the claims of the present invention, all equivalent structures or process change made by using the specification and accompanying figures of the present invention, no matter directly or indirectly used in other related fields, should belong to the scope of the claims of the present invention.

## Claims

1. A method for correcting gamma values of a liquid crystal display (LCD) screen, comprising:
setting different working state values of the LCD screen;
sampling the gamma values embodying display effects of the LCD screen and corresponding to the different working state values of the LCD screen to acquire the sampled gamma values;
fitting the sampled gamma values to a standard gamma curve to acquire the fitted gamma values that most conform to the standard gamma curve;
according to a corresponding relationship between preset fitted gamma values and the working state values of the LCD screen, reading the corresponding working state values of the LCD screen corresponding to the fitted gamma values, and adjusting a current working state value of the LCD screen.

2. The method for correcting gamma values of a LCD screen of claim 1, wherein, setting the different working state values of the LCD screen specifically comprises:
setting working state values of an LCD screen display module under different display effects, wherein:
the working state values of the LCD screen display module are combinations of different working state values of a red backlight module, a green backlight module and a blue backlight module in the LCD screen display module;
the different working state values of the red backlight module, the green backlight module and the blue backlight module are discrete current values gradually increasing from zero by taking one-tenth of a maximum value of a backlight current source as an increment step.

3. The method for correcting gamma values of a LCD screen of claim 2, wherein, after the step of sampling the gamma values embodying the display effects of the LCD screen and corresponding to different working state values of the LCD screen to acquire the sampled gamma values, the method also comprises:
in accordance with a working state order of the red backlight module, the green backlight module and the blue backlight module in the LCD screen display module, correspondingly storing the sampled gamma values.

4. The method for correcting gamma values of a LCD screen of any one of claims 1-3, wherein, the step of fitting the sampled gamma values to the standard gamma curve to acquire the fitted gamma values that most conform to the standard gamma curve specifically comprises:
comparing the stored sampled gamma values with standard gamma values in the standard gamma curve to acquire the fitted gamma values which are closest to the standard gamma values, and form a fitted gamma value parameter table.

5. The method for correcting gamma values of a LCD screen of claim 4, wherein, the working states of the LCD screen comprise: brightness, contrast, saturation and/or grayscale of the LCD screen.

6. An apparatus for correcting gamma values of a LCD screen, comprising:
a setting module, used to set different working state values of the LCD screen;
a measurement module, used to sample the gamma values embodying display effects of the LCD screen according to different working state values of the LCD screen to acquire the sampled gamma values;
a fitting module, used to fit the sampled gamma values to a standard gamma curve to acquire the fitted gamma values that most conform to the standard gamma curve;
a parameter application adjustment module, used to store the corresponding working state values of the LCD screen corresponding to the fitted gamma values; and also used to read the corresponding working state values of the LCD screen corresponding to the fitted gamma values according to a corresponding relationship between preset fitted gamma values and the working state values of the LCD screen, and adjust a current working state value of the LCD screen.

7. The apparatus for correcting gamma values of a LCD screen of claim 6, wherein,
the setting module is also used to set the working state values of an LCD screen display module under different display effects, wherein:
the working state values of the LCD screen display module are combinations of different working state values of a red module backlight module, a green backlight module and a blue backlight module in the LCD display module;
the different working state values of the red backlight module, the green backlight module and the blue backlight module are discrete current values gradually increasing from zero by taking one-tenth of a maximum value of a backlight current source as an increment step.

8. The apparatus for correcting gamma values of a LCD screen of claim 7, further comprising:
a data storage module, used to correspondingly store the sampled gamma values according to a working state order of the red backlight module, the green backlight module and the blue backlight module in the LCD screen display module.

9. The apparatus for correcting gamma values of a LCD screen of claim 6, 7 or 8, wherein,
the fitting module is also used to compare the stored sampled gamma values with standard gamma values in the standard gamma curve to obtain the fitted gamma values which are closest to the standard gamma values and to form a fitted gamma value parameter table.

10. The apparatus for correcting gamma values of a LCD screen of claim 9, wherein,
the working states of the LCD screen comprise: brightness, contrast, saturation and/or grayscale of the LCD screen.
